# EUROPÄISCHE PATENTSCHRIFT

(11) **EP 1 074 462 B1**
(45) Veröffentlichungstag und Bekanntmachung des Hinweises auf die Patenterteilung: **26.05.2004**
(21) Anmeldenummer: 00116551.3
(22) Anmeldetag: 01.08.2000
(51) Int. Cl.: B62M 9/10, B62M 9/12

(54) **Ritzelkassette für eine Kettenschaltung eines Fahrrades**
Gear assembly for a bicycle chain shifter
Ensemble de jeu de pignons à chaîne pour bicyclette

(30) Priorität: 06.08.1999 DE 19937212
(43) Veröffentlichungstag der Anmeldung: 07.02.2001
(73) Patentinhaber: SRAM Deutschland GmbH, 97404 Schweinfurt (DE)
(72) Erfinder: Schmidt, Frank, 97422 Schweinfurt (DE); Reiter, Markus, 97421 Schweinfurt (DE); Wesling, Kevin, Chicago, IL 60610 (US)

(56) Entgegenhaltungen:
- EP-A- 0 510 371
- EP-A- 0 557 011
- EP-A- 0 712 780
- EP-A- 0 834 450
- US-A- 5 480 357
- US-A- 5 492 211

## Beschreibung

Die Erfindung betrifft eine Ritzelkassette, bestehend aus einem Ritzelträger, der zusammen mit einem größten Ritzel, mehreren Abstufungsritzeln und einem kleinen Ritzel zu einer Baueinheit montiert ist. Diese Ritzelkassette ist mit einem Innenprofil ausgestattet, zur Befestigung auf einem Außenprofil eines Antreibers einer Nabe eines Laufrades eines Fahrrades gemäß dem Oberbegriff des Anspruchs 1.

Mit der EP 0 712 780 A1 ist eine Ritzelkassette bekannt geworden, die sich aus einer Mehrzahl von Ritzeln und einer dreiarmigen, gestuften Aufnahmevorrichtung für diese Ritzel zusammensetzt. Es war die Aufgabe dieser Erfindung, eine schnelle zerlegbare Ritzelkassette zu schaffen, bei der auch außerhalb einer Werkstatt einzeine Ritzel gewechselt werden können. Aus diesem Grunde wurden die einzelnen Ritzel auf der dreiarmigen Vorrichtung gefügt, wobei eine axiale Begrenzungsnase diese in ihrer Position hält. Das größte und das kleinste Ritzel sind jeweils mit der Nabe verbunden, wobei durch die dreiarmige Vorrichtung, die zwischen dem größten und kleinsten Ritzel liegenden übrigen Ritzel, ihr Drehmoment über das größte und das kleinste Ritzel auf die Nabe abgeben müssen.

Es dürfte schwerfallen, eine solche dreiarmige Vorrichtung zu produzieren, diese stabil genug für die Weitergabe des Drehmomentes der mittleren Ritzel auszuführen und dabei auch die konzentrische Lage der einzelnen Ritzel zueinander zu garantieren.

Aus der EP 0 510 371 A1 ist eine Kettenradeinbaueinheit zur Lagerung einer Vielzahl von Kettenrädern bekannt. Mehrere, gestufte Abstützarme, die sich vom Außenumfang der Ritzelträger-Nabe radial nach außen erstrecken, nehmen die einzelnen als Zahnkränze gestalteten Ritzel auf. Diese Ritzel werden mit Schrauben an den mit Zentrierstufen versehenen und in Richtung der hinteren Stirnfläche geneigten Abstützarme befestigt. Der Oberflächenverlauf der Zentrierstufe ist gekrümmt bzw. ein Umfangabschnitt und wird vom entsprechenden Radius definiert. Das Antriebsdrehmoment wird über die Schraubverbindung vom Ritzel auf die Abstützarme des Ritzelträgers und dann über dessen Innenprofil auf das Außenprofil des Antreibers übertragen.

Diese Art der Drehmomentübertragung vom Ritzel zum Ritzelträger bzw. vom Ritzelträger zum Antreiber mittels einer Schraub- oder Nietverbindung erfordert aufgrund der Flächenpressung und Festigkeitsanforderungen in aller Regel einen metallischen Werkstoff für den Ritzelträger.

Die in diesen Schutzrechten offenbarten Ritzelkassetten verfügen über Ritzelträger aus Metall. Der Ritzelträger in EP 0 712 780 A1 ist als Blechteil zwar leicht, dafür aber entsprechend elastisch. Der Ritzelträger in EP 0 510 371 A1 ist eine stabile Ausführung, dafür aber entsprechend schwer. Hier gibt es immer noch Verbesserungspotential hinsichtlich Bauaufwand, Drehmomentsteifigkeit und Gewicht.

Die vorliegende Erfindung positioniert die einzelnen Ritzel über einen Ritzelträger, der auf einem Antreiber zentriert ist und als in Spritzguß hergestelltes Kunststoffteil die einzelnen Ritzel sauber zentrieren kann. Außerdem ist Kunststoff spezifisch leicht und kann im Spritzgußverfahren in nahezu jeder beliebigen Form hergestellt werden. Zur Versteifung des Kunststoffmaterials kann dieses mit festigkeitserhöhenden Fasern gefüllt werden, so dass ein großer Teil des Drehmomentes von den Ritzeln auf den Antreiber über den Ritzelträger übertragen werden kann. Es ist daher zweckmäßig, auf ein Außenprofil des Antreibers ein Innenprofil des Ritzelträgers derart anzupassen, dass hier das Drehmoment sauber übertragen werden kann. Es hat sich gezeigt, dass ein Ritzelträger ohne jegliche Versteifung oder Unterstützung durch eine Stahlkonstruktion in der Lage ist, das Drehmoment von den außen am Ritzel angeordneten Ritzeln auf den Antreiber über die Profile zu übertragen. Bei einer hohen Konzentration des Ritzetträger-Kunststoffes mit festigkeitserhöhenden Fasern wird an der Berührungsstelle des Ritzelträgers zum Antreiber im Innenprofil eine ausreichend hohe Lebensdauer erreicht.

Für eine Ritzelkassette, die in Wettbewerbsfahrrädern unter besonders hohen Drehmomentanforderungen steht, wird ein Ritzelträger vorgeschlagen, der an seinem Innenprofil eine drehmomentübertragende Verstärkung aus Metall aufweist, die mit den einzelnen Ritzeln in Verbindung steht. Dies kann darin bestehen, dass eines der Ritzel ebenfalls dieses Innenprofil aufweist und so die Drehmomentverstärkung darstellt, wobei der Ritzelträger dann mit dem drehmomentübertragenden Ritzel drehfest verbunden sein muß. Aus Stabilitätsgründen ist es zweckmäßig, den Ritzelträger mit vier Armen auszuführen, auf denen Zentrierstufen mit Auflageflächen und Mitnahmeflächen angeordnet sind, mit denen die einzelnen Ritzel verbunden sind. Eine Verbindung mit den Zentrierstufen wird vorzugsweise über Nieten erreicht, die die Position der einzelnen Ritzel zueinander und die Abstände zueinander garantieren. Für den Fall besonderer Kantenbelastung der Innenverzahnung des Ritzelträgers aus Kunststoff kann mindestens eines der kleinen Ritzel ebenfalls mit einem Innenprofil versehen werden, wobei dieses stirnseitig am Ritzelträger anliegt und mit dem großen Ritzel gemeinsam mit dem Ritzelträger vernietet wird.

Da eine Ritzelkassette in der herkömmlichen Form, insbesondere durch die großen Ritzel ein hohes Gewicht erhält, ist es ratsam, speziell diese großen Ritzel als Zahnringe mit Speichen auszuführen, um das Gewicht klein zu halten. Bei den kleinen Ritzeln ergibt sich die Problematik nicht, weshalb es zweckmäßig erscheint, die Ritzelkassette lediglich auf die am Gewicht der Ritzelkassette stark beteiligten größeren Ritzel zu beschränken, und die kleinen Ritzel einzeln auf dem Außenprofil des Antreibers anzuordnen, wobei diese in der herkömmlichen Weise mit der Ritzelkassette stirnseitig verschraubbar sind. Auf diese Weise ergeben sich eine Fülle von Variationsmöglichkeiten, die es dem Benutzer eines Fahrrades mit einer solchen Ritzelkassette erlauben, verschiedene Übersetzungen auch außerhalb der Werkstatt am Fahrrad anzubringen.

Es ergibt sich somit die Aufgabe für die vorliegende Erfindung, eine Ritzelkassette zu schaffen, die außerhalb der Werkstatt austauschbar ist, ein geringes Gewicht aufweist und kostengünstig in der Herstellung ist.

Die Lösung dieser Aufgabe wird im kennzeichnenden Teil des Hauptanspruches beschrieben. Ausgestaltungen sind den Unteransprüchen zu entnehmen.

Anhand mehrerer Zeichnungen werden zwei Ausführungsbeispiele von Ritzelkassetten mit einem Ritzelträger aus Kunststoff erläutert. Es zeigen:
- Fig. 1: eine komplett montierte Ritzelkassette;
- Fig. 2: einen Antreiber mit einem Außenprofil, auf den das Innenprofil des Ritzelträgers aufschiebbar ist;
- Fig. 3: den Ritzelträger aus Kunststoff mit Zentrierstufen zur Aufnahme der einzelnen Ritzel;

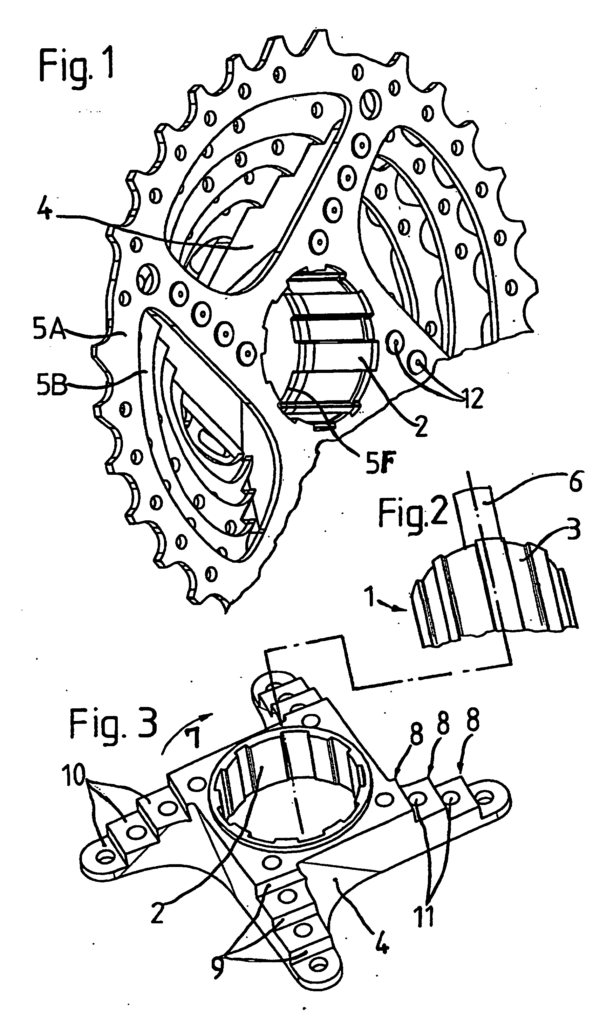

Figur 1 zeigt eine 3D-Darstellung der Ritzelkassette mit einem Ritzelträger **4** aus Kunststoff. Am stufenförmigen, aus faserverstärktem Kunststoff bestehenden Ritzelträger **4** sind die aus metallischem Werkstoff bestehenden Ritzel **5** angeordnet. Die Ritzelkassette setzt sich aus mehreren Ritzel zusammen, z. B. dem größten Ritzel **5A**, das mit den, nur aus einem Zahnkranz mit Befestigungsöffnungen bestehenden Abstufungsritzel **5B** und einem kleinen Ritzel **5F** sowie mit dem Ritzelträger **4** mittels Befestigungselementen **12** in Form von Nieten und wird zu einer kompletten Baueinheit montiert. Das größte Ritzel **5A** und das kleine Ritzel **5F** verfügen ebenso wie der Ritzelträger **4** über ein Innenprofil **2**. Das Antriebsdrehmoment wird vom größten Ritzel **5A**, dem Ritzelträger **4** und dem kleinen Ritzel **5F** über das Innenprofil **2** an das Außenprofil des Antreibers weitergeleitet. Ist eines der Abstufungsritzel **5B** mit der Antriebskette in Eingriff, so wird das Drehmoment vom Zahnkranz des entsprechenden Abstufungsritzels **5B** formschlüssig auf den Ritzelträger **4** und dann zum einen über das Innenprofil **2** am Ritzelträger **4** auf den Antreiber übertragen und zum anderen mit Hilfe der Befestigungselemente **12** an das größte Ritzel **5A** weitergeleitet und von dort über dessen Innenprofil **2** ebenfalls an den Antreiber weitergegeben. Mit dieser Anordnung wird die Belastung des Kunststoffritzetträgers, durch hohe Drehmomente besonders im Bereich des Innenprofiles **2**, auf ein akzeptables Maß reduziert. Auch über das kleine Ritzel **5F**, das mittels der Befestigungselemente **12** drehfest mit dem Ritzelträger **4** verbunden ist, wird ein Teil des hohen Drehmomentes an den Antreiber weitergeleitet.

Figur 2 zeigt den Antreiber **1**, der ein Außenprofil **3**, insbesondere eine Längsverzahnung, aufweist und auf das Innenprofil des Ritzelträgers bzw. des größten Ritzels abgestimmt ist. Der Antreiber **1** ist über eine Achse **6** mit dem Rahmen des Fahrrades verbunden und treibt die Nabe des Laufrades eines Fahrrades an. Der Antrieb erfolgt von einem Tretlager über eine Antriebskette auf eines der Ritzel, so dass das Laufrad über den Antreiber **1** durch Muskelkraft angetrieben werden kann.

Gemäß Figur 3 ist der Ritzelträger **4** mit seinem Innenprofil **2** dargestellt, wobei dieser Ritzelträger **4** speichenförmige Tragarme aufweist, die sich, etwa tangential zum Innenprofil **2**, nach außen erstrecken. An den vier Armen befinden sich die treppenförmigen Zentrierstufen **8**, mit den Auflageflächen **10**, die als seitliche Anlage für die Abstufungsritzel dienen und mit den ebenen Mitnahmeflächen **9**, die gegen die Antriebsrichtung **7** ausgerichtet sind und einen verdrehsichemden Formschluß mit den jeweiligen Abstufungsritzeln bilden. Das größte und das kleine Ritzel wird an den Stirnseiten des Ritzelträgers **4** angenietet. Diese beiden Ritzel benötigen im Gegensatz zu den Abstufungsritzeln keinen Formschluß mit dem Ritzelträger **4**, da sie ebenfalls über ein Innenprofil verfügen und das eingeleitete Drehmoment direkt an das Außenprofil des Antreibers weiterleiten.

Die Abstufungsritzel haben keinen direkten Kontakt mit dem Außenprofil des Antreibers, sondern leiten das anstehende Drehmoment formschlüssig über die Mitnahmeflächen **9** und die Befestigungselemente in die Arme des Ritzelträgers **4** ein. Von dort wird das Drehmoment zum einen über das Innenprofil **2** an den Antreiber weitergeleitet und zum anderen, wie in Figur 1 gezeigt, über die vielen Befestigungselemente auf das größte Ritzel übertragen und dann an den Antreiber weitergegeben. Um die Belastung der Mitnahmeflächen **9**, die etwa senkrecht zur Armausrichtung verlaufen, bei der Drehmomentübertragung möglichst gering zu halten, ist es vorteilhaft, wenn die Arme des Ritzelträgers **4** nicht radial, sondern eher tangential zum Innenprofil **2** ausgerichtet sind.

Bei der Montage der Ritzelkassette werden die Befestigungselemente, z. B. Schrauben oder vorzugsweise Nieten durch entsprechende Öffnungen an den Abstufungsritzeln und dem kleinen Ritzel sowie den Bohrungen **11** des Ritzelträgers **4** geführt und gemeinsam mit dem größten Ritzel verschraubt oder vernietet. Da die kleinsten, nicht zur Ritzelkassette gehörenden Ritzel, die noch weniger Zähne aufweisen als das kleine Ritzel am Ritzelträger **4**, nicht mehr auf dem Ritzelträger **4** anbringbar sind, werden diese direkt auf den Antreiber geschoben und durch eine axiale Fixierverschraubung befestigt. Da diese kleinsten Ritzel im wesentlichen immer über die gleiche Zähnezahlen verfügen, ist es nicht erforderlich, den kompletten Ritzelsatz (kleinste Ritzel plus Ritzelkassette) auszuwechseln, sondern lediglich die mit Ritzeln bestückte Ritzelkassette mit z. B. einer Bergkombination, mit relativ großen Ritzeln, gegen eine Ritzelkassette mit einer Kombination mit weniger großen Ritzeln auszutauschen. Es ist somit also nur erforderlich, einen Teil des Ritzelsatzes, nämlich die mit Ritzeln bestückte Ritzelkassette mit unterschiedlichen Zähnezahtsummen, für einen Umbau bereitzuhalten.

Es wird vorgeschlagen, zur Übertragung besonders großer Drehmomente und der hierfür benötigten großen Ritzel, den Ritzelträger **4** mit dem größten Ritzel über Befestigungseternente, insbesondere über Nieten zu verbinden, wobei das größte Ritzel das gleiche Innenprofil **2** wie der Ritzelträger **4** aufweist. Somit wird verhindert, dass sich das Innenprofil **2** des Ritzelträgers **4** durch ein hohes Drehmoment und der dabei auftretenden großen Kantenbelastung vorzeitig abnutzt bzw. beschädigt wird. Das Innenprofil **2** des Ritzelträgers **4** aus Kunststoff kann überdies noch zusätzlich zum größten Ritzel, auch durch das mit einem Innenprofil **2** ausgestattete kleine Ritzel verstärkt werden, weiches über die Befestigungselemente mit dem Ritzelträger **4** und gleichzeitig mit dem größten Ritzel drehfest verbunden ist.

### Bezugszeichenliste

- 1: Antreiber
- 2: Innenprofil
- 3: Außenprofil
- 4: Ritzelträger
- 5: Ritzel
- 5A: größtes Ritzel
- 5B: Abstufungsritzel
- 5F: kleines Ritzel
- 6: Achse
- 7: Antriebsdrehrichtung
- 8: Zentrierstufe
- 9: Mitnahmefläche
- 10: Auflagefläche
- 11: Bohrung
- 12: Befestigungselement

## Patentansprüche

1. Ritzelkassette
bestehend aus einem Ritzelträger (**4**) und einer Mehrzahl von unterschiedlich großen, nebeneinander auf dem Ritzelträger (**4**) angeordneten Ritzeln (**5**), von denen jedes wahlweise von der Antriebskette in Antriebsdrehrichtung (**7**) angetrieben werden kann, wobei der Ritzelträger (**4**) zur drehfesten Befestigung auf einem Außenprofil (**3**) eines Antreibers (**1**) einer Nabe eines Fahrradlaufrades mit einem entsprechenden Innenprofil (**2**) ausgestattet ist und ferner mit mindestens einem der Ritzel (**5**) drehfest verbunden ist,
**dadurch gekennzeichnet,**
**dass** der Ritzelträger (**4**) aus Kunststoff besteht
und zur Drehmomentübertragung von der Ritzelkassette auf das Außenprofil (**3**) des Antreibers (**1**) auch das mit dem Ritzelträger (**4**) verbundene Ritzel (**5**) mit einem entsprechenden Innenprofil (**2**) ausgestattet ist.

2. Ritzelkassette nach Anspruch 1,
**dadurch gekennzeichnet,**
**dass** mindestens ein mit einem Innenprofil (**2**) versehenes Ritzel (**5**), vorzugsweise das größte Ritzel (**5A**), außen am Ritzelträger (**4**) und koaxial mit den Abstufungsritzeln (**5B**) mittels Befestigungselemente (**12**), mit dem Ritzelträger (**4**) verbunden ist und Antriebsdrehmomente vom Abstufungsritzel (**5B**) über die Befestigungselemente (**12**) auf das größte Ritzel (**5A**) und von dort auf das Außenprofil (**3**) des Antreibers (**1**) übertragen werden.

3. Ritzelkassette nach Anspruch 1,
**dadurch gekennzeichnet,**
**dass** der Ritzelträger (**4**) mit Tragarmen ausgestattet ist, an denen Zentrierstufen (**8**) mit Auflageflächen (**10**), Mitnahmeflächen (**9**) und Bohrungen (**11**), zur formschlüssigen Fixierung der Abstufungsritzel (**5B**), angeordnet sind.

4. Ritzelkassette nach Anspruch 3,
**dadurch gekennzeichnet,**
**dass** die Tragarme am Ritzelträger (**4**) in etwa tangential zum Innenprofil (**2**) ausgerichtet sind und die Mitnahmeflächen (**9**) zur Einleitung und Abstützung des Drehmomentes in den Ritzelträger (**4**) in etwa senkrecht zur Ausrichtung der Tragarme verlaufen.

5. Ritzelkassette nach Anspruch 3,
**dadurch gekennzeichnet,**
**dass** die Mitnahmeflächen (**9**) gegen die Antriebsdrehrichtung (**7**) geneigt sind.

6. Ritzelkassette nach Anspruch 1,
**dadurch gekennzeichnet,**
**dass** auf der dem größten Ritzel (**5A**) gegenüberliegenden Stirnseite des Ritzelträgers (**4**) mindestens ein kleineres Ritzel (**5F**), das aufgrund seiner Größe nicht mehr auf den Ritzelträger (**4**) paßt, mittels der Befestigungselemente (**12**) montierbar ist und zur Drehmomentübertragung auf das Außenprofil (**3**) mit einem Innenprofil (**2**) ausgestattet ist.

7. Ritzelkassette nach Anspruch 6,
**dadurch gekennzeichnet,**
**dass** das kleinere Ritzel (**5F**) drehfest mit dem Ritzelträger (**4**) verbunden ist und das über eines der Ritzel (**5**) eingeleitete Drehmoment über das Innenprofil (**2**) des kleineren Ritzels (**5F**) und des Ritzelträgers (**4**) an den Antreiber (**1**) weitergeleitet wird.

8. Ritzelkassette nach Anspruch 6,
**dadurch gekennzeichnet,**
**dass** das größte Ritzel (**5A**), der Ritzelträger (**4**) sowie das kleinere Ritzel (**5F**) jeweils über ein Innenprofil (**2**) verfügen und mit den Befestigungselementen (**12**) drehfest miteinander verbunden sind, wobei das über eines der Ritzel (**5**) eingeleitete Drehmoment, über das sich über die gesamte Breite der Ritzelkassette erstreckende Innenprofil (**2**), an das Außenprofil (**3**) des Antreibers (**1**) weitergeleitet wird.

## Claims

1. Pinion cassette comprising a pinion carrier (4) and a plurality of pinions (5) which differ in size, are arranged next to one another on the pinion carrier (4) and each of which can be driven according to choice in the driving direction of rotation (7) by the drive chain, the pinion carrier (4), in order to fasten in a rotationally fixed manner on an outer profile (3) of a driver (1) of a hub of a bicycle wheel, being provided with a corresponding inner profile (2) and furthermore being connected in a rotationally fixed manner to at least one of the pinions (5), **characterized in that** the pinion carrier (4) consists of plastic and, for the transmission of torque from the pinion cassette to the outer profile (3) of the driver (1), the pinion (5) which is connected to the pinion carrier (4) is also provided with a corresponding inner profile (2).

2. Pinion cassette according to Claim 1, **characterized in that** at least one pinion (5) which is provided with an inner profile (2), preferably the largest pinion (5A), is connected to the pinion carrier (4) on the outside of the pinion carrier (4) and coaxially with the graduated pinions (5B) by means of fastening elements (12), and driving torques are transmitted from the graduated pinion (5B) via the fastening elements (12) to the largest pinion (5A) and from there to the outer profile (3) of the driver (1).

3. Pinion cassette according to Claim 1, **characterized in that** the pinion carrier (4) is provided with supporting arms on which centring steps (8) having bearing surfaces (10), carry-along surfaces (9) and holes (11) for the form-fitting fixing in place of the graduated pinions (5B) are arranged.

4. Pinion cassette according to Claim 3, **characterized in that** the supporting arms on the pinion carrier (4) are orientated approximately tangentially to the inner profile (2), and the carry-along surfaces (9) run approximately perpendicular with respect to the orientation of the supporting arms in order to introduce the torque into the pinion carrier (4) and support it.

5. Pinion cassette according to Claim 3, **characterized in that** the carry-along surfaces (9) are inclined with respect to the driving direction of rotation (7).

6. Pinion cassette according to Claim 1, **characterized in that** at least one smaller pinion (5F), which no longer fits onto the pinion carrier (4) on account of its size, can be fitted on that end side of the pinion carrier (4) which lies opposite the largest pinion (5A), by means of the fastening elements (12) and is provided with an inner profile (2) for transmitting torque to the outer profile (3).

7. Pinion cassette according to Claim 6, **characterized in that** the smaller pinion (5F) is connected in a rotationally fixed manner to the pinion carrier (4) and the torque introduced via one of the pinions (5) is passed on via the inner profile (2) of the smaller pinion (5F) and of the pinion carrier (4) to the driver (1).

8. Pinion cassette according to Claim 6, **characterized in that** the largest pinion (5A), the pinion carrier (4) and the smaller pinion (5F) each have an inner profile (2) and are connected to one another in a rotationally fixed manner by the fastening elements (12), the torque which is introduced via one of the pinions (5) being passed on via the inner profile (2), which extends over the entire width of the pinion cassette, to the outer profile (3) of the driver (1).

## Revendications

1. Ensemble de jeu de pignons se composant d'un support de pignons (4) et d'une pluralité de pignons (5) de différentes tailles, disposés les uns à côté des autres sur le support de pignons (4), dont chacun peut être entraîné au choix par la chaîne d'entraînement dans le sens de rotation d'entraînement (7), le support de pignons (4) étant équipé d'un profil interne (2) correspondant pour la fixation solidaire en rotation sur un profil extérieur (3) d'un actionneur (1) d'un moyeu d'une roue mobile d'une bicyclette et étant en outre connecté de manière solidaire en rotation à au moins l'un des pignons (5),
**caractérisé en ce que**
le support de pignons (4) se compose de plastique et, pour le transfert du couple depuis l'ensemble de jeu de pignons au profil extérieur (3) de l'actionneur (1), le pignon (5) également connecté au support de pignons (4) est équipé d'un profil interne correspondant (2).

2. Ensemble de jeu de pignons selon la revendication 1,
**caractérisé en ce que**
au moins un pignon (5) pourvu d'un profil interne (2), de préférence le plus grand pignon (5A), est connecté à l'extérieur sur le support de pignons (4) et coaxialement aux pignons d'échelonnement (5B) au moyen d'éléments de fixation (12), au support de pignons (4), et les couples d'entraînement du pignon d'échelonnement (5B) sont transmis par le biais des éléments de fixation (12) au plus gros pignon (5A) et de là au profil extérieur (3) de l'actionneur (1).

3. Ensemble de jeu de pignons selon la revendication 1,
**caractérisé en ce que**
le support de pignons (4) est pourvu de bras porteurs sur lesquels sont disposés des échelons de centrage (8) avec des faces d'appui (10), des faces d'entraînement (9) et des alésages (11), pour la fixation par coopération de forme des pignons d'échelonnement (5B).

4. Ensemble de jeu de pignons selon la revendication 3,
**caractérisé en ce que**
les bras porteurs sont orientés sur le support de pignons (4) approximativement tangentiellement au profil interne (2) et les faces d'entraînement (9) s'étendent approximativement perpendiculairement à l'orientation des bras porteurs pour l'introduction et le support du couple dans le support de pignons (4).

5. Ensemble de jeu de pignons selon la revendication 3,
**caractérisé en ce que**
les faces d'entraînement (9) sont inclinées contre la direction de rotation d'entraînement (7).

6. Ensemble de jeu de pignons selon la revendication 1,
**caractérisé en ce que**
du côté frontal du support de pignons (4) opposé au plus gros pignon (5A), on peut monter au moyen des éléments de fixation (12) au moins un plus petit pignon (5F) qui ne s'adapte plus au support de pignons (4) du fait de sa taille, et qui est pourvu d'un profil interne (2) pour le transfert du couple au profil externe (3).

7. Ensemble de jeu de pignons selon la revendication 6,
**caractérisé en ce que**
le plus petit pignon (5F) est connecté de manière solidaire en rotation au support de pignons (4) et le couple introduit par le biais de l'un des pignons (5) est transmis par le biais du profil interne (2) du plus petit pignon (5F) et du support de pignons (4) à l'actionneur (1).

8. Ensemble de jeu de pignons selon la revendication 6,
**caractérisé en ce que**
le plus gros pignon (5A), le support de pignons (4) ainsi que le plus petit pignon (5F) présentent chacun un profil interne (2) et sont connectés les uns aux autres de manière solidaire en rotation aux éléments de fixation (12), le couple introduit par le biais de l'un des pignons (5) étant transmis au profil extérieur (3) de l'actionneur (1) par le biais du profil interne (2) s'étendant sur toute la largeur de l'ensemble de jeu de pignons.
